# EUROPEAN PATENT SPECIFICATION

(11) **EP 1 415 486 B1**
(45) Date of publication and mention of the grant of the patent: **10.02.2010**
(21) Application number: 02745350.5
(22) Date of filing: 03.06.2002
(51) Int. Cl.: H04W 48/14

(54) **DELIVERY OF BROADCAST INFORMATION TO A MOBILE STATION IN A RADIO COMMUNICATION SYSTEM**
ÜBERMITTLUNG VON RUNDFUNKINFORMATIONEN ZU EINER MOBILSTATION IN EINEM FUNKKOMMUNIKATIONSSYSTEM
TRANSMISSION D'INFORMATION DE DIFFUSION A UNE STATION MOBILE DANS UN SYSTEME DE RADIOCOMMUNICATIONS

(30) Priority: 27.07.2001 GB 0118355
(43) Date of publication of application: 06.05.2004
(73) Proprietor: MOTOROLA, INC., Schaumburg, IL 60196 (US)
(72) Inventor: AITKENHEAD, Gary, John, Bramley, Hampshire RG26 5QF (GB); EMBERSON, Grant, Basingstoke, Hampshire RG26 5DJ (GB); LOBO, Lynette, North York, Ontario M2H 2N1 (CA)
(74) Representative: McCormack, Derek James
(86) International application number: PCT/EP2002/006066
(87) International publication number: WO 2003/013163

(56) References cited:
- WO-A-00/67512
- WO-A-01/47301
- WO-A1-87/01897
- US-A- 5 121 126
- US-A- 5 327 575
- US-A- 5 881 368
- US-B1- 6 295 450

## Description

### Field of the Invention

This invention relates to improved delivery of broadcast information in a radio communication system. The invention is applicable to, but not limited to, delivery of neighbour cell information.

### Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs). The term mobile station generally includes both hand-portable and vehicular mounted 'mobile' radio units.

The communication link from a BTS to an MS is generally referred to as a down-link communication channel. Conversely, the communication link from a MS to a BTS is generally referred to as an up-link communication channel.

Wireless communication systems are distinguished over fixed communication systems, such as the public switched telephone networks (PSTN), principally in that mobile stations move between service providers (and/or different BTS) and in doing so encounter varying-radio propagation environments.

In a wireless communication system, each BTS has associated with it a particular geographical coverage area (or cell). The coverage area defines a particular range that the BTS can maintain acceptable communications with MSs operating in its serving cell. Often these cells combine to produce an expanded system coverage area, with the infrastructure supporting respective cells interconnected via centralised switching equipment. Furthermore, cells are often grouped into location areas for the purposes of tracking a MS within the coverage area, whilst minimising location-updating signalling.

Mobile cellular and trunked radio systems typically allocate a broadcast information radio channel that is used to provide general system information to all mobile stations within coverage area of the system. Within such broadcast channels, each of the base transceiver stations broadcast information pertinent to the cell that they serve, as well as information about neighbouring cells. The serving and neighbour cell information is then used by mobile stations receiving the information to select the optimum cell for access to the system.

Radio frequency (RF) resources, such as bandwidth, are generally limited. Transmission of broadcast information on a signalling channel, clearly takes up bandwidth that could be used for other control channel signalling and user traffic. As the broadcast channel is generally allocated a limited resource, it is desirable to optimise the use of that resource, i.e. bandwidth, available for broadcast information.

It is known that neighbour cell information is sent periodically by each base transceiver station on the main control channel (MCCH) and may also be sent on the associated signalling channel (ACCH) on a trunked radio communication system. The MCCH is monitored by MSs whilst in idle mode, and the ACCH is monitored when MSs are communicating on assigned traffic channels in a call. Generally the base tranceiver station sends information about all of its neighbour cells in one or more downlink messages as a background low-priority task, i.e. when the BTS has little other information to transmit.

Such a periodic broadcast transmission strategy can result in MSs not receiving information about its neighbour cells in an acceptable time period. This is particularly the case for those MSs involved in a call on the traffic channel where broadcast channel bandwidth is particularly scarce. Such delays have been known to result in dropped calls or link failure. Furthermore, such an unregulated broadcast transmission strategy can also result in transmitting broadcast information at times when no MSs actually need the information. Thus, this strategy wastes valuable bandwidth that could have been better used for control signalling or user traffic.

In summary, the inventors of the present invention have recognised that the known prior art in the field of private mobile radio systems uses periodic delivery of neighbour cell information without regard to whether a particular MS is present or whether the MS wishes to receive the information.

A need therefore exists for delivery of broadcast information, particularly broadcast neighbour cell information, to MSs in radio communication systems wherein the abovementioned disadvantages may be alleviated.

Published US patent US-A-5,289,525 describes a cellular radiotelephone network of the prior art. Hand-over of a call is described. US-A-5,327,575 describes a cellular communication using 'mobile assisted handover' in which handover control for a given mobile station is carried out by a serving base station using received signal quality indications from the mobile station. Communications take place individually between the base station and the mobile station, and the base station uses an algorithm to dynamically vary parameters used in selecting cells for handover of the mobile station. WO 87/01897A describes a cellular mobile telephone system in which a mobile telephone needing to undergo handover can request neighbour cell channel information from a base station handling a call for the mobile station.

None of these prior published patent specifications disclses or contemplates a method, system and mobile station in accordance with the present invention to be described herein.

### Statement of Invention

In accordance with a first aspect of the present invention there is provided a method of delivering broadcast information to a mobile station, as claimed in claim 1.

In accordance with a second aspect of the present invention there is provided a communication system, as claimed in claim 10.

In accordance with a third aspect of the present invention there is provided a mobile station, as claimed in claim 13.

Further features of the invention are provided in the dependent claims.

### Brief Description of the Drawings

Embodiments of the present invention will now be described by way of example with reference to the accompanying drawings, in which:
FIG. 1 shows a block diagram of a trunked radio communication system adapted to support the various inventive concepts of a preferred embodiment of the present invention;
FIG. 2 shows a block diagram of a radio communication unit adapted to support the various inventive concepts of the preferred embodiment of the present invention; and
FIG. 3 shows a flowchart depicting a delivery mechanism for delivering neighbour cell information in the communication system, in accordance with the preferred embodiment of the present invention.

### Description of Preferred Embodiments

This invention proposes a number of methods to optimise transmission of broadcast neighbour cell information needed by a mobile station to assist in cell selection such that a mobile station receives the information when the MS needs it. In this manner, the methods prevent unnecessary transmission of broadcast information using bandwidth that could be utilised for other purposes.

In particular, this invention proposes using trigger mechanisms in the infrastructure to initiate transmission of neighbour cell information to one or more MS(s), in contrast to periodically transmitting the information regardless of whether or not the information is needed.

The trigger mechanism in the infrastructure is responsive to the mobile station. In each method, an event involving the MS or an action by the MS provides the actuating stimulus to the trigger mechanism.

As noted earlier, each of the base transceiver stations broadcast information pertinent to the cell that they serve, as well as information about neighbouring cells. The serving and neighbour cell information is then used by mobile stations receiving the information to select the optimum cell for access to the system.

US-A-5,881,368 describes a system in which dispatch units can communicate power control requests to a base station transmitting on a forward link broadcast channel. In response, the base station responds by increasing the transmission power of the forward link broadcast channel.

US-A-5,121,126 describes a system in which a beacon transmits information as to location of a nearby pay telephone. The information can be picked up on pager and used by a person carrying the pager to find the pay telephone. The pager may have a transmitter which causes a signal to be sent to the beacon to actuate sending of the location information by the beacon.

However, it is not described or contemplated in US-5,881,368 or in US-A-5,121,126 that, in response to a trigger, information can be broadcast which comprises neighbouring cell information that the receiving device can use in a cell selection procedure.

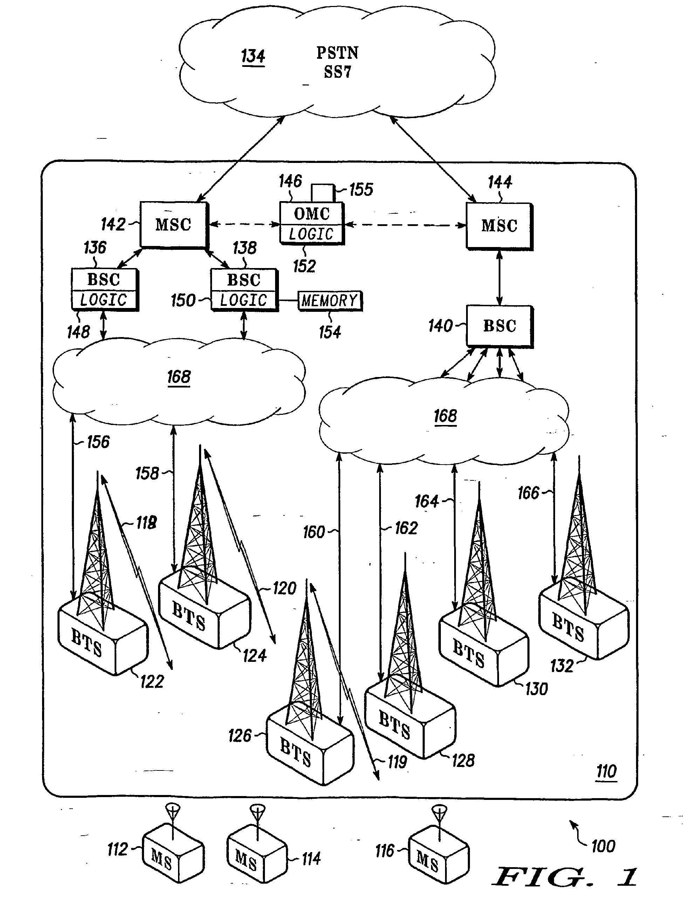

Reverting to emobodiments of the invention and referring first to FIG. 1 of the accompanying drawings, a trunked radio communications system 100, supporting a TErrestrial Trunked RAdio (TETRA) air-interface is shown, in outline, in accordance with a preferred embodiment of the invention. The TETRA air-interface has been defined by the European Telecommunications Standards Institute (ETSI). Generally, the air-interface protocol is administered from base transceiver sites that are geographically spaced apart - one base site supporting a cell (or, for example, sectors of a cell).

A plurality of subscriber units, such as a mixture of MSs 112-116 and fixed terminals (not,shown), communicate over the selected air-interface 118-120 with a plurality of base transceiver stations (BTS) 122-132. A limited number of MSs 112-116 and BTSs 122-132 are shown for clarity purposes only.

The system infrastructure in a TETRA system is generally referred to as a switching and management infrastructure (SwMI) 110, which substantially contains all of the system elements apart from the MSs 112-116. The BTSs 122-132 may be connected to a conventional public-switched telephone network (PSTN) 134 through base station controllers (BSCs) 136-140 and mobile switching centres (MSCs) 142-144.

Each BTS 122-132 is principally designed to serve its primary cell, with each BTS 122-132 containing one or more transceivers. The BTSs 122-132 communicate 156-166 with the rest of the trunking system infrastructure via a frame relay interface 168.

Each BSC 136-140 may control one or more BTSs 122-132, with BSCs 136-140 generally interconnected through MSCs 142-144. Each BSC 136-140 is-therefore able to communicate with one another, if desired, to pass system administration information therebetween. The BSCs 136-140 are responsible for establishing and maintaining control channel and traffic channels to serviceable MSs 112-116 affiliated therewith. The interconnection of BSCs 136-140 therefore allows the trunked radio communication system to support handover of the MSs 112-116 between cells.

Each MSC 142-144 provides a gateway to the PSTN 134, with MSCs 142-144 interconnected through an operations and management centre (OMC) 146 that administers general control of the trunked radio system 100, as will be understood by those skilled in the art. The various system elements, such as BSCs 136-138 and OMC 146, will include control logic 148-152, with the various system elements usually having associated memory 154 (shown only in relation to BSC 138 for the sake of clarity). The memory 154 typically stores historically compiled operational data as well as in-call data, system information, control algorithms and neighbour cell - information.

In addition to administering general control of the trunked radio system 100, in accordance with the preferred embodiment of the invention, the OMC 146 contains a trigger response function 155.

In operation, in accordance with the preferred embodiment of the invention, the OMC 146 has been adapted to incorporate the trigger response function 155 and transmit neighbour cell information to MS(s) within particular cells upon receiving a neighbour cell information trigger.

The neighbour cell information trigger can be initiated in any of the following scenarios:

### First Embodiment

In accordance with a first embodiment of the present invention, a neighbour cell information trigger is initiated when a MS, say MS 112, performs a seamless handover between cells, i.e. moves from a traffic channel on one cell to a traffic channel on another cell. In this case, the new cell may detect the arrival of the MS 112. The detection may be as a result of exchanging signalling information with the MS 112, or simply detecting uplink transmission of traffic on the traffic channel.

The trigger response function 155 of the OMC 146 associated with the new cell can use this detection as a trigger to send neighbour cell information to that MS 112 as quickly as possible. In particular, neighbour cell information can be sent to any MS that is recognised as having just arrived on the cell, but also recognised, or known, as not having up-to-date neighbour cell information.

### Second Embodiment

In accordance with a second embodiment of the present invention, a neighbour cell information trigger can be initiated when a MS 112 registers with a cell, for example on the main control channel (MCCH). The trigger response function 155 of the OMC 146 associated with the cell can use this event as a trigger to broadcast neighbour cell information on the MCCH, recognising that there is at least one new MS 112 that does not have up-to-date neighbour cell information.

If the MS 112 then restores an ongoing call before receiving the neighbour cell broadcast information, which could happen if the MS 112 has registered as a result of drop-and-reconnect handover, the new cell shall then broadcast neighbour cell information to the MS 112 on the traffic channel for the restored call. In this case, the new cell may cancel transmission of the broadcast neighbour cell information on the main control channel, since the MS 112 has subsequently moved to a traffic channel.

### Third Embodiment

In accordance with a third embodiment of the present invention, a neighbour cell information trigger can be initiated if a MS 112 arrives-at a cell and has not received neighbour cell information within a pre-defined time period. Furthermore, or in the alternative, the MS may detect that serving cell conditions are deteriorating such that neighbour cell information is needed. The pre-defined time period managed by the trigger response function 155 may be variable depending on whether the MS 112 is in a call or not. If the MS 112 has not received neighbour cell information, initiated by the trigger response function 155 of the OMC 146, within a pre-defined time period, the MS 112 may conclude that there has been a transmission failure. The MS 112 may then request the new cell to transmit the neighbour cell information by transmitting a signalling message on an uplink resource.

In this way, the OMC 146 in the SwMI 110 can transmit neighbour cell information only in response to triggers, defined as above in any of the three embodiments, or as a result of an explicit request from a MS. The ability of a MS 112 to request the information effectively provides a repeat mechanism to compensate for times when broadcast transmissions are unreliable, i.e. the MS 112 does not acknowledge receipt and the BTS 122 does not repeat the broadcast.

Furthermore, it is within the contemplation of the invention that the speedy delivery of neighbour cell information may use techniques such as stealing, as defined in the TETRA standard. 'Stealing', in this context, incorporates 'hijacking' transmission slots or frames to transmit higher priority information.

Such a strategy also ensures that the MS 112 can start neighbour cell scanning and, if appropriate, perform cell re-selection quickly if signal conditions are changing rapidly. Advantageously, speedy cell re-selection optimises communication resources within the network.

In addition, by implementing any or all of the aforementioned embodiments, the inventors have recognised that periodic broadcasting of information will, or at least may in certain circumstances, no longer be required. In such a case, the system relies upon sending -information only in response to a trigger. This means that no broadcast information needs to be sent to MS(s) if the information does not change and there is a low level of MS mobility within the cell.

It is within the contemplation of the invention that the broadcast information may be sent as a broadcast to all MS, within the coverage area of a cell, even though the trigger may emanate only from one particular MS. In this case, all MS listening to the broadcast information gain the benefit of receiving the information.

Preferably, when transmitting neighbour cell information to a MS 112, the OMC 146 ranks the neighbour cells in order of handover likelihood for a respective MS 112. Using this method, the OMC 146 may first send broadcast information about those cells immediately adjacent to the serving cell when it receives a trigger to send broadcast information.

Subsequently, it could send information about the other cells further from the serving cell that would be less likely candidates for handover.

It is within the contemplation of the invention that this method could be further enhanced if the MS 112 includes its precise location in the registration message. The precise location may be obtained via a global positioning system (GPS) unit or some other such method, for example a MS 112 or system or combined time of arrival and angle of arrival or triangulation methods, as known in the art of cellular system design.

The primary objective is to transmit neighbour cell information as fast as possible for those cells to which the MS 112 is closest. In this manner, the MS 112 can initiate RF measurements and build a list of candidate cells for subsequent handover. This additional method further enhances this aspect of the invention whilst minimising transmission bandwidth.

A yet further enhancement to the above mechanism allows for the OMC 146 of the SwMI 110 to include second tier neighbour cells, for example additional neighbours to the serving cell's immediate adjacent neighbours, as required. The selection of second tier neighbour cells is preferably based on a knowledge of the mobile's location and knowledge of the terrain. In some cases, a more distant site may actually provide better coverage in a small area that is shadowed by say, a hill or building.

Using this method, if the distant site was included in the neighbour list, the MS 112 could be handed over to the more distant cell in the area. This method provides a higher level of sophistication in ranking neighbour cells in order of handover likelihood for an MS 112 taking into account terrain and obstacles.

In the context of the present invention, the BTS has been adapted to respond to the trigger response function 155 of the OMC 146. However, it is within the contemplation of the invention that the trigger response function 155, and decision-making processes associated therewith, may be incorporated into a MSC, BSC or BTS. Alternatively, such functions and processes may be distributed between a number of such infrastructure elements in the system architecture.

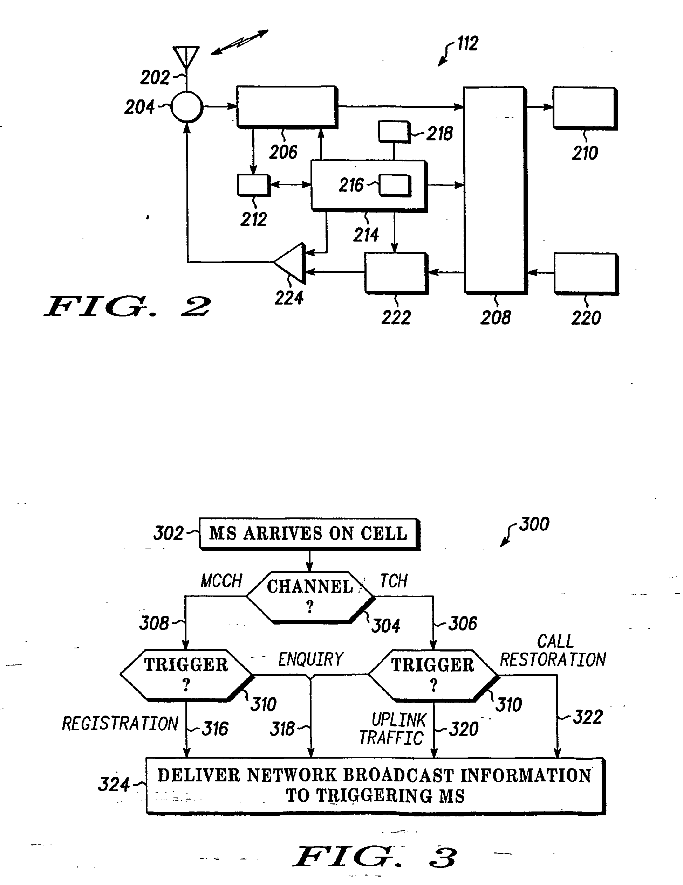

Referring now to FIG. 2, a block diagram of a subscriber unit/mobile station (MS) 112 adapted to support the inventive concepts of the preferred embodiments of the present invention is shown.

The MS 112 contains an antenna 202 preferably coupled to a duplex filter or circulator 204 that provides isolation between receive and transmit chains within MS 112.

The receiver chain includes scanning receiver front-end circuitry 206 (effectively providing reception, filtering and intermediate or base-band frequency conversion). The scanning front-end circuit 206 scans signal transmissions from its associated BTS and perhaps any direct-mode (DM) call set-up messages from other MS in its talk group. The scanning front-end circuitry 206 is serially coupled to a signal processing function (processor, generally realised by a DSP) 208.

In accordance with a preferred embodiment of the invention, the receiver chain 210, in particular the signal processing function 208, coupled to the scanning front-end circuit 206, has been adapted for a receiving MS to receive and process messages, such as neighbour cell information, sent by the trigger response function 155. In this manner, the MS 112 can start neighbour cell scanning and, if appropriate, perform cell re-selection quickly if the prevailing signal conditions justify cell re-selection.

In accordance with the second embodiment of the invention, in the situation, for example, where the MS 112 restores an ongoing call before receiving any neighbour cell broadcast information, the signal processor and scanning front-end circuitry 206 have been adapted to receive broadcast neighbour cell information on the traffic channel for the restored call. In this case, the MS 112 will not scan the MCCH for a transmission of the broadcast neighbour cell information, thereby saving time and processor power.

A controller 214 is operably coupled to the scanning front-end circuitry 206 so that the receiver can calculate receive bit-error-rate (BER) or frame-error-rate (FER) or similar link-quality measurement data from recovered information via a received signal strength indication (RSSI) 212 function. The RSSI 212 function is operably coupled to the scanning front-end circuit 206. The memory device 216 stores a wide array of MS-specific data, such as decoding/encoding functions, neighbour and serving cell information relating to timing, frequency channels, power control and the like, as well as link quality measurement information to enable an optimal communication link to be selected.

A timer 218 is operably coupled to the controller 214 to control the timing of operations, namely the transmission or reception of time-dependent signals, within the MS 112. As known in the art, received signals that are processed by the signal processing function are typically input to an output device 210, such as a speaker or visual display unit (VDU).

In the context of the preferred embodiment of the present invention, timer 218 is used to synchronize the MS 112 to the timing dictated by the SwMI 110, in particular to receive, or request, a neighbour cell transmission. Furthermore, the timer 218 enables the MS 112 to respond to such early transmission of neighbour cell information quickly.

As regards the transmit chain, this essentially includes an input device 220, such as a microphone, coupled in series through the signal processor 208, transmitter/modulation circuitry 222 and a power amplifier 224. The processor 208, transmitter/modulation circuitry 222 and the power amplifier 224 are operationally responsive to the controller, with an output from the power amplifier coupled to the duplex filter or circulator 204, as known in the art.

The transmit chain in MS 112, particularly with regard to the third embodiment of the present invention, has been adapted to request a new serving cell to transmit the neighbour cell information. Such a request is made by transmitting a signalling message on the uplink.

The reqest may be initiated if the MS 112 has not received neighbour cell information, within a pre-defined time period, resulting in the MS 112 concluding that there had been a transmission failure.

Furthermore, the MS 112 may request the broadcast information to be-transmitted in response to the MS 112 recognising a deterioration in signal conditions. In such a manner, the MS has recognised that in order to continue with a communication, the MS may need to find an alternative BTS/communication provider. Consequently, the MS needs to be informed of suitable neighbouring cells.

The signal processor function 208 in the transmit chain may be implemented as distinct from the processor in the receive chain. Alternatively, a single processor 208 may be used to implement the processing of both transmit and receive signals, as shown in FIG. 2.

Of course, the various components within the MS 112 can be realised in discrete or integrated component form. Furthermore, it is within the contemplation of the invention that MS 112 may be one of a mobile phone, a portable or mobile PMR radio, a personal digital assistant, a lap-top computer or a wirelessly networked PC that requires access to the communication system.

More generally, the trigger response function 155 and processes associated therewith may be implemented in a respective communication unit-in any suitable manner. For example, new apparatus may be added to a conventional communication unit (for example OMC 146), or alternatively existing parts of a conventional communication unit may be adapted, for example by reprogramming one or-more processors therein. As such the required adaptation may be implemented in the form of processor-implementable instructions stored on a storage medium, such as a floppy disk, hard disk, PROM, RAM or any combination of these or other storage multimedia. Referring now to FIG. 3, a flowchart 300 is shown depicting a delivery mechanism for delivering neighbour cell information in a communication system, in accordance with the preferred embodiment of the present invention.

An MS arrives in a cell, see step 302. Then, the OMC 146 receives a trigger in step 304, as shown in step 310. This may be on either the MCCH, see 308, or a traffic channel (TCH), see 306.

The trigger in step 310 is initiated within the trigger response function in the infrastructure, for example within the OMC 146, in accordance with any of the aforementioned embodiments. The trigger may occur as a result of one or more of the following: a registration process in step 316, an enquiry in step 318, an up-link request from a MS in step 320, a call restoration in step 322. After the trigger has been initiated, the network broadcast information, for example neighbour and/or serving cell information, is delivered to the MS(s), as shown in step 324.

In this manner, one or more of a number of methods are used to optimise transmission of broadcast information, in particular neighbour cell information, such that a MS receives the information when the MS needs it. Advantageously, the methods prevent unnecessary transmission of broadcast information using bandwidth that could be utilised for other purposes.

In the above embodiments, the delivery of broadcast information is appropriate to the radio system described. -However, it will be appreciated that alternative broadcast delivery mechanisms using a trigger-based arrangement may be applicable to other radio or fixed communication systems involving broadcast data.

The present invention finds particular application in a private mobile radio communication system such as TETRA. However, the inventive concepts contained herein are equally applicable to alternative fixed or cellular communication systems such as the Universal Mobile Telecommunications Standard (UMTS), and the Global System for Mobile communications (GSM) and any derivatives thereof.

It will be understood that the delivery of neighbour cell information to a mobile station in a radio communication system as described above provides at least the following advantages:
(i) provides a MS with neighbour cell parameters in a reasonable time period, even when in a call on a cell-site with heavy traffic load;
(ii) that periodic broadcasting of information will, or at least may in certain circumstances, no longer be required and
(iii) the transmission of neighbour cell information is optimised by detecting when a new mobile station arrives on the cell so that any transmission of broadcast information, for example periodic transmission, does not waste channel bandwidth.

Thus, a method of delivering broadcast information to a mobile station in a radio communication system, having a plurality of communication cells that are able to serve said mobile station with a communication link, has been described. The method includes the steps of receiving a broadcast information trigger caused by a mobile station; and transmitting, in response to receiving said trigger, broadcast information to the mobile station. Also, a communication system, having a plurality of communication cells that are able to serve a plurality of mobile stations with a communication link, has been described. The communication system includes a trigger response function, responsive to at least one mobile station, for generating a broadcast information trigger; and a transmitter, operably coupled to said trigger response function to broadcast information to at least one mobile station in response to said generated trigger.

In addition, a communication system, a mobile station and a storage medium storing processor-implementable instructions for controlling one or more processors to carry out any of the aforementioned method steps has been described.

Whilst specific, and preferred, implementations of the present invention are described above, it is clear that variations and modifications of such inventive concepts could be readily applied by one skilled in the art.

## Claims

1. A method (300) of delivering information to a mobile station (112) in a radio communication system (100) including generating in an infrastructure of the system a trigger (310) caused by an action of the mobile station (112) and, in response to generating of said trigger (310), transmitting (324) to the mobile station (112) from a base transceiver station of the infrastructure in a cell serving the mobile station neighbour cell information to assist the mobile station in cell selection, **characterised in that** the system is a trunked communication system and the neighbour cell information is information needed by all mobile stations served by the serving cell for cell selection and is broadcast by the base transceiver station on a broadcast channel used to provide information to all mobile stations within coverage area of the base transceiver station, and the trigger is caused by a trigger event detected by a trigger response means of an infrastructure of the system, the trigger event selected from:
(i) the mobile station registering with or attaching to the serving cell;
(ii) the mobile station arriving at the serving cell and detecting that it has not received within a pre-defined time period broadcast neighbour cell information expected in response to the arrival and, in response to such detection, sending a request signal for the neighbour cell information and the trigger response means thereby recognising that there is at least one mobile station which does not have up-to-date neighbour cell information.

2. A method according to claim 1 wherein the system is a TETRA system.

3. A method according to claim 1 wherein the mobile station uses the the broadcast information it has received to perform a cell selection.

4. A method according to claim 3 wherein the cell selection performed by the mobile station is cell re-selection and includes neighbour cell scanning.

5. A method according to any one of the preceding claims wherein the pre-defined time period is variable dependent on whether said mobile station (112) is in a call.

6. A method to any one of the preceding claims, the method further comprising the step of:
ranking neighbour cell information based on a likelihood of said mobile station (112) selecting a particular cell to move to.

7. A method according to claim 6 which includes the base transceiver station transmitting higher ranked neighbour cell information in preference to lower ranked neighbour cell information in response to the step of producing a trigger.

8. A method according to claim 6 or claim 7 and further comprising the steps of:
obtaining an indication of said mobile station's (112) location; and
ranking said neighbour cell information in response to the location.

9. A method according to any preceding claim, wherein the transmission of broadcast neighbour cell information by the base transceiver station is only sent in response to a trigger.

10. A communication system (100) having a plurality of neighbouring communication cells that are able to serve via a base transceiver of each of the cells a plurality of mobile stations (112) with a communication link, the communication system (100) comprising:
a trigger response means (155) in an infrastructure of the system for generating an information transmission trigger, the trigger response means being responsive to an action of at least one mobile station; and a base transceiver station in a cell serving the at least one mobile station, operably coupled to said trigger response means (155), to send neighbour cell information to the at least one mobile station (112) in response to said generated trigger; **characterised in that** the system is a trunked communication system and the neighbour cell information is information needed by all mobile stations served by the serving cell for cell selection for access to the system, the base transceiver station is operable to broadcast the information on a broadcast channel used to provide information to all mobile stations within coverage area of the base transceiver station, and the trigger response means is operable to detect a trigger event selected from:
(i) the mobile station registering with or attaching to the serving cell;
(ii) the mobile station arriving at the serving cell and detecting that it has not received within a pre-defined time period broadcast neighbour cell information expected in response to the arrival and, in response to such detection, sending a request signal for the neighbour cell information and the trigger response means thereby recognising that there is at least one mobile station which does not have up-to-date neighbour cell information.

11. A communication system according to claim 10 which is a TETRA system.

12. A communication system (100) according to claim 10 or claim 11, wherein the trigger response means is in one or more of: an operations and management centre (146), a base transceiver station (122-132), a base station controller (136-140), a mobile switching centre (142-144).

13. A mobile station (112) operable as one of the mobile stations of the system according to any one of claims 10 to 12 to send to an infrastructure element (155) of the communication system a request signal to act as a trigger causing trigger response means of said system to broadcast information relating to neighbouring communication cells that are able to serve said mobile station (112) with a communication link and also operable to select a cell of the system to serve the mobile station by using the broadcast neighbour cell information, wherein the mobile station is operable to detect that it has arrived at a serving cell of the system and to detect that it has not received within a pre-defined time period expected broadcast neighbour cell information in response to the arrival and to send the request signal in response to such detection.

14. A mobile station according to claim 13 wherein the mobile station is operable to perform cell re-selection including neighbour cell scanning using the received broadcast neighbour cell information.

15. A mobile station according to claim 13 or claim 14, wherein the mobile station is a mobile phone, a portable or mobile PMR radio, a personal digital assistant, a lap-top computer or a wirelessly networked personal computer.

## Patentansprüche

1. Verfahren (300) zum Liefern von Information an eine Mobilstation (112) in einem Funkkommunikationssystem (100), wobei das Verfahren folgendes umfasst: Erzeugen, in einer Infrastruktur des Systems, eines durch eine Maßnahme der Mobilstation (112) verursachten Auslösers (310) und, als Reaktion auf das Erzeugen des genannten Auslösers (310), Senden (324) von Nachbarzellinformation von einer Basistransceiverstation der Infrastruktur in einer die Mobilstation bedienenden Zelle an die Mobilstation (112), um die Mobilstation bei einer Zellauswahl zu unterstützen, **dadurch gekennzeichnet, dass** das System ein Bündelfunkkommunikationssystem ist und die Nachbarzellinformation Information ist, die von allen Mobilstationen, die von der bedienenden Zelle bedient werden, zur Zellauswahl benötigt wird und von der Basistransceiverstation auf einem zum Bereitstellen von Information an alle Mobilstationen innerhalb des Empfangsgebietes der Basistransceiverstation verwendeten Rundrufkanal ausgesandt wird, wobei der Auslöser durch ein von Auslöserreaktionsmitteln einer Infrastruktur des Systems detektiertes Auslöserereignis verursacht wird, wobei das Auslöserereignis aus dem Folgenden ausgewählt ist:
(i) die Mobilstation meldet sich bei der bedienenden Zelle an oder schließt sich an sie an;
(ii) die Mobilstation trifft in der bedienenden Zelle ein und detektiert, dass sie innerhalb einer vordefinierten Zeitdauer als Reaktion auf das Eintreffen erwartete Rundrufhachbarzellinformation nicht empfangen hat, und sendet als Reaktion auf eine solche Detektion ein die Nachbarzellinformation betreffendes Anforderungssignal aus, und die Auslöserreaktionsmittel erkennen **dadurch**, dass sich dort mindestens eine Mobilstation befindet, die nicht über aktuelle Nachbarzellinformation verfügt.

2. Verfahren gemäß Anspruch 1, wobei das System ein TETRA-System ist,

3. Verfahren gemäß Anspruch 1, wobei die Mobilstation die Rundrufinformation, die sie empfangen hat, verwendet, um eine Zellauswahl vorzunehmen.

4. Verfahren gemäß Anspruch 3, wobei die von der Mobilstation vorgenommene Zellauswahl eine Zell-Neuauswahl ist und Nachbarzellscannen einschließt.

5. Verfahren gemäß einem der vorhergehenden Ansprüche, wobei die vordefinierte Zeitdauer in Abhängigkeit davon, ob sich die genannte Mobilstation (112) in einem Abruf befindet variabel ist.

6. Verfahren gemäß einem der vorgehenden Ansprüche, wobei das Verfahren weiter den folgenden Schritt aufweist:
der Nachbarzellinformation einen Rang zuweisen auf der Grundlage einer Wahrscheinlichkeit, dass die genannte Mobilstation (112) eine bestimmte Zelle für eine Bewegung dorthin auswählt.

7. Verfahren gemäß Anspruch 6, wobei die Basistransceiverstation als Reaktion auf den Schritt des Erzeugens eines Auslösers Nachbarzellinformation mit höherem Rang im Vergleich zu Nachbarzellinformation mit niedrigerem Rang bevorzugt aussendet.

8. Verfahren gemäß Anspruch 6 oder 7, das weiter die folgenden Schritte aufweist:
eine Angabe des Ortes der genannten Mobilstation (112) empfangen; und der Nachbarzellinformation in Abhängigkeit von dem Ort einen Rang zuweisen.

9. Verfahren gemäß einem der vorgehenden Ansprüche, wobei die Übertragung von Rundrufnachbarzellinformation durch die Basistransceiverstation nur als Reaktion auf einen Auslöser ausgesandt wird.

10. Kommunikationssystem (100) mit einer Pluralität benachbarter Kommunikationszellen, die imstande sind, über einen Basistransceiver von jeder der Zellen eine Pluralität von Mobilstationen (112) mit einer Kommunikationsverbindung zu bedienen, wobei das Kommunikationssystem (100) folgendes umfasst;
Auslöserteaktionsmittel (155) in einer Infrastruktur des Systems, zum Erzeugen eines Informationssendeauslösers, wobei die Auslöserreaktionsmittel auf eine Maßnahme mindestens einer Mobilstation ansprechen; und eine Basistransceiverstation in einer die mindestens eine Mobilstation bedienenden Zelle, wobei die Basistransceiverstation betriebsfähig mit den genannten Auslöserreaktionsmitteln (155) verbunden ist, um als Reaktion auf den genannten erzeugten Auslöser Nachbarzellinformation an die mindestens eine Mobilstation (112) zu senden; **dadurch gekennzeichnet, dass** das System ein Bündelfunkkommunikationssystem ist und die Nachbarzellinformation Information ist, die von allen Mobilstationen, die von der bedienenden Zelle bedient werden, für eine Zellauswahl für einen Zugang zu dem System benötigt wird, wobei die Basistransceiverstation derart betreibbar ist, dass sie die Information auf einem Rundrufkanal aussendet, welcher dazu verwendet wird, Information an alle Mobilstationen innerhalb des Empfangsgebietes der Basistransceiverstation zu übertragen, und wobei die Auslöserreaktionsmittel derart betreibbar sind, dass sie ein aus dem Folgenden ausgewähltes Auslöserereignis detektieren:
(i) die Mobilstation meldet sich bei der bedienenden Zelle an oder schließt sich an sie an;
(ii) die Mobilstation trifft in der bedienenden Zelle ein und detektiert, dass sie innerhalb einer vordefinierten Zeitdauer als Reaktion auf das Eintreffen erwartete Rundruf-Nachbarzellinformation nicht empfangen hat, und sendet als Reaktion auf eine solche Detektion ein die Nachbarzellinformation betreffendes Anforderungssignal aus, und die Auslöserreaktionsmittel erkennen **dadurch**, dass sich dort mindestens eine Mobilstation befindet, die nicht über aktuelle Nachbarzellinformation verfügt.

11. Kommunikationssystem gemäß Anspruch 10, welches ein TETRA-System ist.

12. Kommunikationssystem (100) gemäß Anspruch 10 oder Anspruch 11, wobei sich die Auslöserreaktionsmittel in einem oder mehr von dem Folgenden befinden: ein Operations- und Steuerungszentrum (146), eine Basistransceiverstation (122-132), ein Basisstationscontroller (136-140), ein mobiles Vermittlungszentrum (142-144).

13. Mobilstation (112), die als eine der Mobilstationen des Systems gemäß einem der Ansprüche 10 bis 12 derart betreibbar ist, dass sie an ein Infrastrukturelement (155) des Kommunikationssystems ein Anforderungssignal sendet, um als ein Auslöser zu fungieren, welcher bewirkt, dass Auslöserreaktionsmittel des genannten Systems Information aussenden, welche benachbarte Kommunikationszellen betrifft, die imstande sind, die genannte Mobilstation (112) mit einer Kommunikationsverbindung zu bedienen, und die auch derart betreibbar ist, dass sie eine Zelle des Systems zur Bedienung der Mobilstation unter Verwendung der ausgesandten Nachbarzellinformation auswählt, wobei die Mobilstation derart betreibbar ist, dass sie detektiert, dass sie in einer bedienenden Zelle des Systems eingetroffen ist, und sie detektiert, dass sie innerhalb einer vordefinierten Zeitdauer als Reaktion auf das Eintreffen erwartete Rundruf-Nachbarzellinformation nicht empfangen hat, und sie als Reaktion auf eine solche Detektion das Anforderungssignal aussendet.

14. Mobilstation gemäß Anspruch 13, wobei die Mobilstation derart betreibbar ist, dass sie eine Zell-Neuauswahl einschließlich Nachbarzellscannen unter Verwendung der empfangenen Rundruf-Nachbarzellinformation vornimmt.

15. Mobilstation gemäß Anspruch 13 oder 14, wobei die Mobilstation ein Mobiltelefon, ein tragbares oder mobiles PMR-Radio, ein Personal Digital Assistant, ein Laptop-Computer oder ein Personalcomputer in einem Drahtlosnetzwerk ist.

## Revendications

1. Procédé (300) de distribution d'informations à une station mobile (112) dans un système de radiocommunication (100) comprenant la génération, dans une infrastructure du système, d'un déclenchement (310) provoqué par une action de la station mobile (112) et, en réponse à la génération dudit déclenchement (310), la transmission (324), à la station mobile (112), à partir d'une station d'émission-réception de base de l'infrastructure dans une cellule desservant la station mobile, d'informations de cellules voisines pour aider la station mobile dans la sélection de cellule, **caractérisé en ce que** le système est un système de communication à ressources partagées et les informations de cellules voisines sont des informations nécessaires à toutes les stations mobiles desservies par la cellule desservante pour la sélection de cellule et sont diffusées par la station d'émission-réception de base sur un canal de diffusion utilisé pour fournir des informations à toutes les stations mobiles dans la zone de couverture de la station d'émission-réception de base, et le déclenchement est provoqué par un événement de déclenchement détecté par des moyens de réponse à un déclenchement d'une infrastructure du système, l'événement de déclenchement étant sélectionné parmi les événements suivants :
(i) la station mobile s'enregistrant auprès de la cellule desservante ou s'attachant à celle-ci ;
(ii) la station mobile arrivant dans la cellule desservante et détectant qu'elle n'a pas reçu dans une période de temps prédéfinie les informations de cellules voisines diffusées attendues en réponse à l'arrivée et, en réponse à cette détection, envoyant un signal de demande pour les informations de cellules voisines et les moyens de réponse à un déclenchement reconnaissant de ce fait qu'il y a au moins une station mobile qui ne dispose pas d'informations de cellules voisines à jour.

2. Procédé selon la revendication 1, dans lequel le système est un système TETRA.

3. Procédé selon la revendication 1, dans lequel la station mobile utilise les informations de diffusion qu'elle a reçues pour effectuer une sélection de cellule.

4. Procédé selon la revendication 3, dans lequel la sélection de cellule effectuée par la station mobile est une resélection de cellule et comprend le balayage de cellules voisines.

5. procédé selon l'une quelconque des revendications précédentes, dans lequel la période de temps prédéfinies varie selon que ladite station mobile (112) est ou non engagée dans un appel.

6. Procédé selon l'une quelconque des revendications précédentes, le procédé comprenant en outre l'étape consistant à :
classer les informations de cellules voisines sur la base d'une probabilité que ladite station mobile (112) sélectionne une cellule particulière pour un déplacement vers celle-ci.

7. Procédé selon la revendication 6, qui comprend la transmission, par la station d'émission-réception de base, des informations de cellules voisines plus haut dans le classement de préférence aux formations de cellules voisines plus bas dans le classement en réponse à l'étape de production d'un déclenchement.

8. Procédé selon la revendication 6 ou la revendication 7 et comprenant en outre les étapes consistant à :
obtenir une indication de l'emplacement de ladite station mobile (112) ; et
classer lesdites informations de cellules voisines en réponse à l'emplacement.

9. Procédé selon l'une quelconque des revendications précédentes, dans lequel la transmission d'informations de cellules voisines diffusées par la station d'émission-réception de base n'est envoyée qu'en réponse à un déclenchement.

10. Système de communication (100) comportant une pluralité de cellules de communication voisines qui sont capables de desservir, par l'intermédiaire d'un émetteur-récepteur de base de chacune des cellules, une pluralité de stations mobiles (112) par une liaison de communication, le système de communication (100) comprenant: des moyens de réponse à un déclenchement (155) dans une infrastructure du système pour générer un déclenchement de transmission d'informations, les moyens de réponse à un déclenchement étant sensibles à une action d'au moins une station mobile ; et une station d'émission-réception de base dans une cellule desservant ladite au moins une station mobile, couplée en fonctionnement auxdits moyens de réponse à un déclenchement (155), pour envoyer des informations de cellules voisines à ladite au moins une station mobile (112) en réponse audit déclenchement généré ; **caractérisé en ce que** le système est un système de communication à ressources partagées et les informations de cellules voisines sont des informations nécessaires à toutes stations mobiles desservies par la cellule desservante pour une sélection de cellule pour accéder au système, la station d'émission-réception de base peut être utilisée pour diffuser les informations sur un canal de diffusion utilisé pour fournir des informations à toutes les stations mobiles dans la zone de couverture de la station d'émission-réception de base, et les moyens de réponse à un déclenchement peuvent être utilisés pour détecter un événement de déclenchement sélectionné parmi les événements suivants :
(i) la station mobile s'enregistrant auprès de la cellule desservante ou s'attachant à celle-ci ;
(ii) la station mobile arrivant dans la cellule desservante et détectant qu'elle n'a pas reçu dans une période de temps prédéfinie les informations de cellules voisines diffusées attendues en réponse à l'arrivée et, en réponse à cette détection, envoyant un signal de demande pour les informations de cellules voisines et les moyens de réponse à un déclenchement reconnaissant de ce fait qu'il y a au moins une station mobile qui ne dispose pas d'informations de cellules voisines à jour.

11. Système de communication selon la revendication 10, qui est un système TETRA.

12. Système de communication (100) selon la revendication 10 ou la revendication 11, dans lequel les moyens de réponse à un déclenchement sont dans un ou plusieurs : d'un centre d'exploitation et de gestion (146), d'une station d'émission-réception de base (122 à 132), d'un contrôleur de stations de base (136 à 140), d'un commutateur du service mobile (142 à 144).

13. Station mobile (112) pouvant être utilisée en tant qu'une des stations mobiles du système selon l'une quelconque des revendications 10 à 12 pour envoyer, à un élément d'infrastructure (155) du système de communication, un signal de demande pour agir en tant que déclenchement amenant les moyens de réponse à un déclenchement dudit système à diffuser des informations concernant les cellules de communication voisines qui sont capables de desservir ladite station mobile (112) par une liaison de communication et pouvant également être utilisée pour sélectionner une cellule du système pour desservir la station mobile en utilisant les informations de cellules voisines diffusées, dans laquelle la station mobile peut être utilisée pour détecter qu'elle est arrivée dans une cellule desservante du système et pour détecter qu'elle n'a pas reçu dans une période de temps prédéfinie les informations de cellules voisin s diffusées attendues en réponse à l'arrivée et pour envoyer le signal de demande en réponse à cette détection.

14. Station mobile selon la revendication 13, dans laquelle la station mobile peut être utilisée pour effectuer une resélection de cellule comprenant le balayage de cellules voisines en utilisant les informations de cellules voisines diffusées reçues.

15. Station mobile selon la revendication 13 ou la revendication 14, dans laquelle la station mobile est un téléphone mobile, une radio PMR portable ou mobile, un assistant numérique personnel, un ordinateur portable ou un ordinateur personnel en réseau sans fil.
